# EUROPÄISCHE PATENTSCHRIFT

(11) **EP 1 309 643 B1**
(45) Veröffentlichungstag und Bekanntmachung des Hinweises auf die Patenterteilung: **18.01.2006**
(21) Anmeldenummer: 01965160.3
(22) Anmeldetag: 02.08.2001
(51) Int. Cl.: C08G 18/28, C08G 18/70, C08J 3/12, B01J 8/00, B01J 2/02

(54) **VERFAHREN ZUR ERZEUGUNG VON POLYURETHAN-PARTIKELN**
METHOD FOR PRODUCING POLYURETHANE PARTICLES
PROCEDE DE FABRICATION DE PARTICULES DE POLYURETHANE

(30) Priorität: 15.08.2000 DE 10040551
(43) Veröffentlichungstag der Anmeldung: 14.05.2003
(73) Patentinhaber: Kilzer, Andreas, 58452 Witten (DE); Weidner, Eckhardt, 44795 Bochum (DE); Petermann, Marcus, 58455 Witten (DE)
(72) Erfinder: PROSS, Alexander, 51467 Bergisch Gladbach (DE); LUCAS, Heinz-Werner, 51467 Bergisch-Gladbach (DE); STEPANSKI, Horst, 51381 Leverkusen (DE); WEIDNER, Eckhardt, 44795 Bochum (DE); PETERMANN, Marcus, 44801 Bochum (DE); KILZER, Andreas, 58452 Witten (DE)
(74) Vertreter: Beyer, Andreas
(86) Internationale Anmeldenummer: PCT/EP2001/008955
(87) Internationale Veröffentlichungsnummer: WO 2002/014396

(56) Entgegenhaltungen:
- WO-A-95/21688
- US-A- 4 403 084
- US-A- 4 795 330

## Beschreibung

Die vorliegende Erfindung betrifft ein Verfahren zur partikulären Aufarbeitung von thermisch aktivierbaren Polyurethanen aus Lösung oder Schmelze. Die erfindungsgemäß hergestellten Partikel eignen sich zum Verkleben unterschiedlicher Substrate.

Thermisch aktivierbare Polyurethane werden aus ihren Lösungen oder Schmelzen aufgearbeitet, indem in die vorgelegte Lösung oder Schmelze unter Druck ein kompressibler Hilfsstoff gelöst und die erhaltene Lösung mittels einer Entspannungsvorrichtung versprüht wird, so dass Partikel entstehen, die schließlich aus dem Strom des entspannten Hilfsstoffes und ggf. des Lösemittels abgetrennt werden. Solche Partikel eignen sich als Klebstoffe bzw. zur Herstellung von Klebstoffen.

Thermisch aktivierbare Polyurethane sind segmentierte Polyurethane auf Basis von kristallisierenden oligomeren Dihydroxyverbindungen einer im allgemeinen zwischen 500 und 5000 g/mol liegenden Molmasse, bevorzugt Polyestern, optional ergänzt durch amorphe oligomere Dihydroxyverbindungen, weiterhin aromatischen oder aliphatischen Diisocyanaten, optional niedermolekularen difunktionellen Kettenverlängerungsmitteln und ebenfalls optional weiteren Zuschlagstoffen wie Lichtschutzmitteln, Alterungsschutzmitteln, Puderungsmitteln sowie polyfunktionellen Vernetzermolekülen, bevorzugt Isocyanaten in freier oder blockierter Form.

Derartige Verbindungen zeichnen sich dadurch aus, dass ihre sogenannten Weichsegmente bereits bei einer vergleichsweise niedrigen Temperatur von z.B. 50°C dekristallisieren. Diese stoffabhängige Temperatur wird im folgenden Kristallitschmelztemperatur genannt, sie kann zum Beispiel mittels DSC bestimmt werden.

Die Verwendung von thermisch aktivierbaren Polyurethanen als Klebstoffe zum Verkleben der verschiedensten Werkstoffe mit sich selbst und anderen Materialien ist beispielsweise aus DE-A-1 256 822 und DE-A-1930 336 bekannt.

Eine thermische Aktivierung kann in der Praxis durch eine kurzfristige Bestrahlung mit Infrarotlicht oder auch durch eine kurze Verweilzeit im Heißluftofen oder Wärmetunnel erreicht werden. Im thermisch aktivierten Zustand ist der Klebstofffilm klebrig und kann gefügt werden. Das Fließverhalten dieser Polymere wird andererseits durch die starken intermolekularen Wechselwirkungen ihrer Urethangruppen bestimmt, so dass bereits der aktivierte Klebstofffilm in der Klebfuge eine sehr hohe Sofortfestigkeit aufbaut und Rückstellkräfte der Fügeteile aufnimmt. Außerdem wird hierdurch eine deutlich über der Kristallitschmelztemperatur liegende Dauergebrauchstemperatur des geklebten Verbundes erreicht.

Die Rekristallisation der Weichsegmente nach erfolgter thermischer Aktivierung nimmt einen gewissen Zeitraum in Anspruch, der je nach chemischer Zusammensetzung des Polyurethans und Umgebungstemperatur zwischen Minuten und Stunden liegen kann. Sie kann zum Beispiel durch wiederholte Messungen der Shore A-Härte abkühlender Polymerfilme verfolgt werden. Als Folge der verzögerten Rekristallisation ergibt sich ein spezifisches Zeitfenster, innerhalb dessen der Klebfilm leicht, d.h. mit geringem Druck und in kurzer Kontaktzeit, gefügt werden kann. Dieses ist selbstverständlich auch von Fügedruck und -zeit abhängig und liegt in der Praxis meist zwischen wenigen Sekunden und etlichen Minuten. Oft wird diese Zeitspanne als das Hot Tack Life bezeichnet (Festel et al., Adhäsion Nr. 5, 1997, 16).

Durch diese spezifischen Eigenschaften erfüllen thermisch aktivierbare Polyurethane die Anforderungen der modernen Fügetechnik, d.h. sie gewährleisten hohe Sofortfestigkeit bei gleichzeitig langer Verarbeitungszeit nach ihrer thermischen Aktivierung.

Es ist bekannt, dass Klebstoffe auf Basis von thermisch aktivierbaren Polyurethanen nicht nur als Lösungen in organischen Lösemitteln oder wässrige Dispersionen (H.W. Lucas et al., Adhesives Age Nr. 2, 1997, 18), sondern auch löse- bzw. trägermittelfrei in Form von Klebfolien (H.J. Studt, Coating Nr. 2, 1993, 34), -netzen (J. Hürten et al., Adhäsion Nr. 3, 1997, 34) oder -vliesen (EP-A-0 628 650) sowie in Form von Klebpulvem oder -pasten (H. Simon, Adhesives Age Nr. 8, 1998, 28) angewendet werden können. In der modernen Fügetechnik sind Pulverklebstoffe von wachsender Bedeutung, etwa zum Verkleben von Textilien. Als in Frage kommende Substrate sind hier insbesondere die unterschiedlichen textilen Flächengebilde zu nennen, etwa auf Basis von Baumwolle, Baumwollmischgeweben, Wolle, Wollemischgeweben, Polyester- und Polyamidgeweben sowie Polyolefinen. Teilchengrößen unter 600 µm eignen sich dabei für einfache Streuanwendungen, bevorzugt sind allerdings Teilchengrößen unter 200 µm und insbesondere unter 100 µm, die sich z.B. für das Pastenpunkt- oder Doppelpunktverfahren eignen.

Die Herstellung der thermisch aktivierbaren Polyurethane erfolgt durch Polyaddition der zuvor erwähnten Edukte in konzentrierter Lösung (Rührkesseltechnik) oder Schmelze (Reaktionsschneckentechnik, Mischkopftechnik). (U. Barth, Plastverarbeiter 40 (1989) Nr. 1.) Da bei einem Lösungsverfahren nach gängiger Praxis zunächst das Prozesslösemittel durch Eindampfung abgetrennt wird, stellt die hochviskose Polyurethanschmelze ein verfahrensunabhängiges Zwischenprodukt dar, welches durch einen geeigneten Prozessschritt in ein klebfreies, verarbeitungsfähiges Produkt umgewandelt werden muss. Die Schmelzeviskositäten solcher Polyurethane liegen unter Prozeßbedingungen (d.h. bei Temperaturen von 130 bis 180°C und Scherraten von 10 bis 300 s⁻¹) meist über 1.000 Pa·s (gemessen in einem HochdruckKapillarviskosimeter mit Düsengeometrie 30 / 2 mm, Fabrikat Rheograph 2002, Fa. Göttfert, DE).

Stand der Technik bei den Rührkessel- und Reaktionsschneckenverfahren ist die Granulierung der Polymerschmelze über einen Extruder in einen zirkulierenden, turbulenten Kaltwasserstrom hinein, wobei die Länge der Ringleitung so bemessen wird, dass jedem Granulat-Teilchen beim einmaligen Durchlauf eine Verweilzeit im Minutenbereich bleibt, um durch die fortschreitende Weichsegmentkristallisation klebfrei zu werden. Gelangen die Granulen dagegen zu früh in den Abscheider und die nachgeschalteten Apparate, so droht Agglomeration und Verstopfung. Es ist wesentlich festzuhalten, dass hierfür nicht die Oberflächentemperatur der im Wasserstrom suspendierten Granulen, sondern die durch die chemische Zusammensetzung verursachte verzögerte Rekristallisation den limitierenden Faktor darstellt.

Neben den beträchtlichen Investitions-, Betriebs- und Instandhaltungskosten für großtechnische Schneckenmaschinen und eine Infrastruktur aus Wasserkreisläufen, Abscheidern, Trocknern, Förderanlagen usw. ist die hohe Produktbelastung durch Wärme und Scherkräfte während der Extrusionsphase und, im Fall des Lösungsverfahrens, auch während der Ausdampfphase als Nachteil zu nennen, was insbesondere in Verbindung mit dem nachfolgenden Kontakt der Schmelze mit dem Granulierwasser stets die Gefahr eines unerwünschten Kettenabbaus und einer thermooxidativen Alterung mit sich bringt. Außerdem können selbst bei Anwendung der sogenannten Mikrogranuliertechnik die Korngrößen nicht unter etwa 1 mm gesenkt werden.

Eine Alternative hierzu stellen Verfahren dar, bei denen das über einen Mischkopf auf ein Band (bei kontinuierlicher Durchführung) bzw. in Platten oder Blöcke (bei diskontinuierlicher Durchführung) gegossene und thermisch behandelte Produkt nach Abkühlung vom Band bzw. manuell aus den Formen geschält und anschließend auf die gewünschte Korngröße vermahlen wird. Hierbei ist durch geeignete Kühlmaßnahmen zu verhindern, dass sich das Mahlgut durch die eingetragene Mahlenergie über die Kristallitschmelztemperatur hinaus erwärmt und verblockt. Bei einer Maßstabsvergrößerung in den großtechnisch relevanten Bereich überschreiten die linear mit der installierten Kapazität wachsenden Kosten solcher Verfahren jedoch sehr bald den vergleichbaren Aufwand für ein Rührkessel- oder Reaktionsschneckenverfahren. Dem diskontinuierlich betriebenen Mischkopfverfahren stehen außerdem arbeitsplatzhygienische Vorbehalte entgegen.

Pulverartige Korngrößen lassen sich mit den beschriebenen Verfahren nur durch eine spezielle Kryomahltechnik mit Kühlung durch flüssigen Stickstoff erzielen (S. Grant et al., Journal of Coated Fabrics Nr. 4, 1997, 316), wobei neben dem großen Gasbedarf auch der Instandhaltungs- und Reinigungsaufwand der Mühlen einen erheblichen und an sich unerwünschten technischen Aufwand darstellt.

Eine weit entwickelte Technologie zur Formgebung viskoser Schmelzen ist die Pastillierung. Hierbei wird die Schmelze aus einem geeigneten Bauteil (z.B. rotierende Trommel) mit speziellen Öffnungen und getaktet arbeitenden Einbauten (z.B. Düse / Nadel, Glocke / Stempel) auf eine gekühlte Fläche (z.B. Laufband oder Drehteller) ausgebracht. Die Obergrenze dieser Technologie in bezug auf die Viskosität liegt bei ca. 100 Pa·s, die minimale Teilchengröße bei ca. 1 mm (S. Gehrmann, Hydrocarbon Engineering Nr. 10, 1998, 1). Diese Technologie kommt also für die oben beschriebenen thermisch aktivierbaren Polyurethane nicht in Frage.

Als Verfahren zur Herstellung von Partikeln bzw. Pulvern ist aus der EP-A-0 744 992 das sogenannte PGSS-Verfahren bekannt (Particles from Gas Saturated Solutions). Diesem liegt die Erkenntnis zugrunde, dass es zur Erzeugung von Partikeln häufig genügt, in einer Lösung oder Schmelze des Wertstoffes unter Druck ein Gas aufzulösen und anschließend die gashaltige (bevorzugt gasgesättigte) Lösung oder Schmelze zu versprühen. Die Entspannung des Gases bewirkt eine Abkühlung, die durch eine entsprechend hohe Gasbeladung so groß gewählt werden kann, dass die Erstarrungstemperatur des Wertstoffs unterschritten wird, wodurch dieser unmittelbar partikulär anfällt und vom Gasstrom abgetrennt werden kann. Evtl. vorhandene Lösemittel werden mit dem Abgasstrom wegtransportiert, so dass das PGSS-Verfahren neben der Formgebung auch zur simultanen Abtrennung eines Wertstoffes aus einer Lösung genutzt werden kann. Im Vergleich zu anderen Hochdruckverfahrenstechniken zur Pulvererzeugung ist bei PGSS der Gasbedarf erheblich reduziert, so dass derzeit allein dieses Verfahren für eine großtechnische Anwendung in Betracht kommt.

Mit dem in EP-A-0 744 992 beschriebenen Verfahren lassen sich neben vielen niedermolekularen Substanzen auch Polymere pulverisieren. Das gasbeladene Stoffgemisch muss dazu allerdings förderbar und sprühbar sein. Aus dem Bereich der Sprühtrocknung bzw. Sprühkühlung ist bekannt, dass die Viskosität des Sprühmediums nicht beliebig hoch sein darf, im allgemeinen unter 1 bis 10 Pa·s. Die oben beschriebenen thermisch aktivierbaren Polyurethane haben jedoch unter Verfahrensbedingungen Schmelzeviskositäten von 1.000 bis 10.000 Pa·s, also um drei Zehnerpotenzen darüber. Die in Frage kommenden Polymere müssen weiterhin die Eigenschaft aufweisen, bei Unterschreiten ihrer individuellen Erweichungstemperatur spontan zu erstarren. Bei den oben beschriebenen, thermisch aktivierbaren Polyurethanen steht jedoch die an sich gewünschte Eigenschaft der verzögert einsetzenden Kristallisation der Polyestersegmente einer Verarbeitung nach dem PGSS-Verfahren entgegen, denn um eine Agglomeration der klebrigen Partikel zu vermeiden, müsste der erforderliche Sprühturm Fallzeiten von mehreren Minuten gestatten. Entsprechende Apparate sind nicht bekannt. Die Behandlung von Lösungen oder Schmelzen thermisch aktivierbarer Polyurethane nach dem PGSS-Verfahren war daher weder Gegenstand des Stands der Technik noch naheliegend.

Aus der US-A-4 795 330 ist bekannt, eine Reihe von Materialien, unter anderem auch Vorläufer von Polyurethanen, zu versprühen, um feste Partikel aus dem versprühten Material zu erzeugen. Die Viskosität des zu versprühenden Fluids soll niedriger als 4 Pa.s sein und vorzugsweise im Bereich von 0,0005 bis 1 Pa·s liegen. Es wird als überraschend bezeichnet, dass selbst Fluide mit Viskositäten größer als 3 Pa·s (aber kleiner als 4 Pa·s) erfolgreich versprüht werden können.

Aus der US-A-4 403 084 sind thermisch aktivierbare Polyurethane bekannt.

Der vorliegenden Erfindung lag die Aufgabe zugrunde, eine partikuläre Aufarbeitung thermisch aktivierbarer Polyurethane aus Lösung oder Schmelze zu finden, die das Produkt ohne die Nachteile der bestehenden Technologien in einer möglichst feinteiligen, klebfreien, förderbaren, lagerfähigen und verkäuflichen Form bereitstellt.

Diese Aufgabe konnte durch das erfindungsgemäße Verfahren gelöst werden, nach welchem die Erzeugung von Partikeln thermisch aktivierbarer Polyurethane durch das Versprühen gashaltiger Lösungen oder Schmelzen möglich ist.

Das erfindungsgemäße Verfahren zur Erzeugung von Partikeln aus Lösungen oder Schmelzen enthält die Schritte
- Bereitstellen einer förderbaren Lösung oder Schmelze des thermisch aktivierbaren Polyurethans mit einer Schmelzeviskosität im Bereich von 1.000 bis 10.000 Pa·s, vorzugsweise mit einem Gehalt zwischen 40 und 99,5 Gew.% Polyurethan,
- Bereitstellen eines kompressiblen Hilfsstoffes, vorzugsweise Kohlendioxid,
- Auflösen des kompressiblen Hilfsstoffes in der Lösung oder Schmelze des thermisch aktivierbaren Polyurethans unter einem Druck zwischen 50 und 1000 bar, vorzugsweise 80 bis 800 bar, insbesondere 100 bis 600 bar zu einem Gemisch aus Polyurethan, kompressiblem Hilfsstoff und gegebenenfalls Lösemittel,
- gegebenenfalls Temperierung des entstehenden Gemisches auf 40 K unterhalb bis 150 K oberhalb des Kristallitschmelzpunktes des Polyurethans,
- Entspannen des Gemisches mittels einer Entspannungsvorrichtung in einen Behälter, wobei sich die Temperatur im Behälter mindestens 22 K und vorzugsweise mehr als 50 K unter der Erweichungstemperatur des Polyurethans einstellt und noch im Freistrahl eine Bildung von nicht zusammen klebenden Partikeln stattfindet, und schließlich
- Abtrennen der gebildeten Partikel aus dem Strom des entkomprimierten kompressiblen Hilfsstoffes und ggf. des Lösemittels.

Die betreffenden thermisch aktivierbaren Polyurethane sind aufgebaut aus
a) kristallisierenden oligomeren Dihydroxyverbindungen,
b) optional amorphen oligomeren Dihydroxyverbindungen in einem gegenüber a) unterschlüssigen Massenanteil,
c) aromatischen und/oder aliphatischen Diisocyanaten,
d) optional niedermolekularen difunktionellen Kettenverlängerungsmitteln und
e) optional weiteren Zuschlagstoffen wie Lichtschutzmitteln, Alterungsschutzmitteln, Puderungsmitteln sowie polyfunktionellen Vernetzermolekülen.

Als Dihydroxyverbindungen kommen grundsätzlich sämtliche Oligomere mit einer im allgmeinen zwischen 500 und 5000 g/mol liegenden zahlenmittleren Molmasse in Frage, welche eine thermoanalytisch nachweisbare Kristallisation der Ketten aufweisen, vorzugsweise mit einer Kristallitschmelztemperatur oberhalb der Raumtemperatur. In der Praxis handelt es sich hierbei oft um Polyester, z.B. auf Basis von Adipinsäure und niedermolekularen Kettenverlängerungsmitteln oder auch auf Basis von Caprolacton. Daneben kommen auch bestimmte Polyether, z.B. die des Tetrahydrofurans, oder auch Polycarbonate in Frage. Selbstverständlich können auch Mischungen aus den in Frage kommenden Substanzen eingesetzt werden.

Neben kristallisierenden Dihydroxyverbindungen können optional auch Anteile von nicht kristallisierenden, also amorphen Dihydroxyverbindungen zum Einsatz kommen. Einige in Frage kommende Stoffklassen sind Polyester, z.B. der ortho-Phthalsäure, sowie Polyether, z.B. Polypropylenoxide, weiterhin Polyolefine, z.B. modifizierte Polybutadiene oder auch modifizierte Polyacrylate. Selbstverständlich können auch Mischungen aus den in Frage kommenden Substanzen eingesetzt werden.

Bei den aromatischen Diisocyanaten handelt es sich vorzugsweise um MDI und/oder - TDI und bei den aliphatischen um HDI, H₆-TDI, H₁₂-MDI und/oder IPDI. Selbstverständlich können auch Mischungen aus den in Frage kommenden Substanzen eingesetzt werden.

Als niedermolekulare Kettenverlängerungsmittel werden vorzugsweise Diole eingesetzt. Hiervon werden vorzugsweise 1,4-Butandiol und/oder 1,6-Hexandiol verwendet. Möglich sind aber ebenfalls Diamine oder Aminoalkohole sowie Phenolderivate. Weiterhin können die verwendeten Kettenverlängerungsmittel ionisch modifiziert sein, etwa durch Sulfonat- oder Carboxylatgruppen. Selbstverständlich können auch Mischungen aus den in Frage kommenden Substanzen eingesetzt werden.

Bei den optional enthaltenen Vernetzermolekülen handelt es sich vorzugsweise um polyfunktionelle Isocyanate in blockierter oder freier Form. Dies schließt natürlich auch difunktionelle Isocyanate wie etwa das Uretdion-Dimere oder das Harnstoff-Dimere des TDI mit ein. Selbstverständlich können auch Mischungen aus den in Frage kommenden Substanzen eingesetzt werden.

In einer bevorzugten Ausführungsform wird das erfindungsgemäße Verfahren mit einem Polyurethan durchgeführt, das in einem organischen Lösemittel oder Lösemittelgemisch gelöst vorliegt, bevorzugt in Toluol. Hierbei beträgt der Massenanteil des Polyurethans in der Mischung vorzugsweise 40 bis 99,5 Gew.-%. Neben dem Polyurethan wird ein Prozesslösemittel in einer Konzentration, bezogen auf die Mischung, von bis zu 60 Gew.% vorgelegt.

In einer anderen bevorzugten Ausführungsform wird das erfindungsgemäße Verfahren mit praktisch lösemittelfreiem Polyurethan durchgeführt, d.h. mit einem Lösemittelanteil in der Mischung von unter 0,5 Gew.-%.

Allgemein wird das erfindungsgemäße Verfahren beispielsweise mit Kohlendioxid, n- oder iso-Alkanen wie Ethan, Propan oder Butan, n- oder iso-Alkenen wie Ethen, Propen oder Buten, halogenhaltigen Kohlenwasserstoffen, Ethern wie Dimethylether, Ethylmethylether oder Diethylether, stickstoffhaltigen Verbindungen wie Stickstoff, Ammoniak oder Distickstoffmonoxid oder Schwefelhexafluorid oder Gemischen hieraus als kompressiblem Hilfsstoff durchgeführt. Es können aber auch andere kompressible Hilfsstoffe verwendet werden.

In Abhängigkeit von den speziellen Parametern einer Durchführungsvariante des erfindungsgemäßen Verfahrens wird man während des Auflösens des kompressiblen Hilfsstoffs den Druck einstellen. Den für das jeweilige System optimalen Druck wird der Fachmann in Routine-Vorversuchen ermitteln. Meist wird er in einem Bereich von 50 bis 1000 bar liegen, für die in der vorliegenden Patentanmeldung beispielhaft beschriebenen Systeme liegt er bevorzugt im Bereich von 80 bis 800 bar, insbesondere im Bereich 100 bis 600 bar.

Die Temperatur beträgt während des Auflösens bis zu 150 K, insbesondere bis zu 100 K über der Kristallitschmelztemperatur des lösemittelfreien Polyurethans. Sie kann aber auch um bis zu 40 K unter der Kristallitschmelztemperatur liegen.

Bevorzugt wird das erfindungsgemäße Verfahren kontinuierlich betrieben. Die pulsationsarme, kontinuierliche Zuführung der Polymerlösung bzw. -schmelze zum Mischorgan hat sich als vorteilhaft erwiesen. Folgende Förderaggregate kommen in Abhängigkeit vom zu verarbeitenden Polyurethan in Frage, die Auswahl des bevorzugten Aggregats erfolgt nach den in der Verfahrenstechnik üblichen Regeln:
- Zahnradpumpen erfüllen die Anforderungen an eine pulsationsarme Fördercharakteristik, sind jedoch im Differenzdruck zwischen Saug- und Druckseite begrenzt. Außerdem kann Gas durch die mit Fördermedium gefüllten Dichtspalte in die Polymervorlage zurückschlagen. Typischerweise können mit Polymerschmelzen, die meist nicht-newtonisch fließen, Differenzdrücke von 100 bis 300 bar erzielt werden, was für die Durchführung der Erfindung ausreichend sein kann.
- Extruder können höhere Differenzdrücke als Zahnradpumpen erzeugen. Allerdings droht ebenso wie bei Zahnradpumpen unter bestimmten Betriebsbedingungen das Zurückschlagen von Gas in die Saugleitung, was für die Polymervorlage von Nachteil sein kann.
- Kolbenpumpen haben sich als bevorzugte Ausführungsformen erwiesen.

Eine Kolbenpumpe ermöglicht hohe Differenzdrücke und ist gleichzeitig aufgrund ihrer Konstruktion rückschlagsicher. In einer weiteren Ausführungsform als Kolbenmembranpumpe (im Folgenden Membranpumpe genannt) wird darüber hinaus eine Verfestigung des Polymers, wie sie z.B. in stopfbuchsgedichteten Kolbenpumpen erfolgen kann, vermieden. Die erfolgreiche Anwendung von Kolbenpumpen zur pulsationsarmen Förderung von Polymerlösungen oder -schmelzen erfordert aber eine spezielle Konstruktion und Betriebsweise:
- Pulsationsarme Förderung wird durch Mehrkopfausführung, z.B. 3 um 120° phasenversetzt betriebene Pumpenköpfe oder durch Verknüpfung mehrerer Einzelpumpen, z.B. sog. Doppel-Plunger-Pumpen, erreicht.
- Der Zulauf hochviskoser Stoffe in die Zylinder der Kolbenpumpenköpfe wird erreicht durch
   - Anwendung hoher statischer Drücke im Vorlagegefäß,
   - Verwendung von Spezialventilen in den Pumpenköpfen,
   - Verwendung von saugseitigen Unterstützungspumpen zur Druckerhöhung (im folgenden Zulaufpumpen genannt), z.B. Zahnradpumpen,
   - Abstimmung der Fördermengen der Zulaufpumpe(n) und der Kolbenpumpe(n) auf elektronischem Wege, z.B. durch Massen- und/oder Volumenstrommessung, Frequenzregler oder elektrische Hubverstellung, bzw. auf mechanischem Wege durch Verwendung von Dämpfungsgliedern zwischen Zulaufpumpe und Kolbenpumpe sowie
   - Kombinationen der genannten Möglichkeiten.

Das Polymer wird mittels der beschriebenen Maßnahmen einer Mischstelle zugeführt. In der Mischstelle wird die Polymerlösung bzw. -schmelze mit einem verdichteten Gas in Kontakt gebracht. Dies kann erfolgen im Gleich-, Gegen- und/oder Kreuzstrom sowie durch Drallströmung. Weiterhin kann eine Verbesserung der Mischwirkung bzw. eine Vordispergierung des Gases in der Polymerlösung bzw. -schmelze erreicht werden durch
- zusätzliche strömungsbrechende Einbauten in die Mischstelle,
- die Verwendung von Filtermaterialien, z.B. Sintermetallen, oder
- die Verwendung eines mechanisch angetriebenen Mischers oder Kneters sowie
- Kombinationen der genannten Möglichkeiten.

Die Auflösung des kompressiblen Hilfsstoffes in hochviskosen, stark kohäsiven Medien kann optimiert werden, indem die Auflösung
- in einem Autoklaven mittels Umpumpen entweder der hochviskosen polymerhaltigen Phase oder der niedrigviskosen gashaltigen Phase oder beider Phasen im Gleich-, Gegen- oder Kreuzstrom, ggf. unter Verwendung eines Rührorganes oder durch ausschließliche Verwendung eines Rührorganes,
- in einem Extruder oder
- in einem statischen Mischer erfolgt.

Hierzu sind mindestens zwei Stoffströme, nämlich eine Polymerlösung bzw. -schmelze und ein Gas, miteinander zu mischen, die sich in ihrer Viskosität um bis zu sieben Zehnerpotenzen unterscheiden. Das Verhältnis der Volumina von Polymerlösung bzw. -schmelze zu verdichtetem Gas beträgt 0,5 bis 30, insbesondere 1 bis 20. Nach K.J. Myers et al. (Chemical Engineering Progress Nr. 6, 1997, 30) sind statische Mischer für solche Unterschiede in Stoffwerten und Volumenströmen an sich nicht geeignet. Überraschenderweise und für den Fachmann nicht vorhersehbar wurde aber gefunden, dass unter Einhaltung bestimmter Bedingungen sehr wohl statische Mischer zur Lösung der erfindungsgemäßen Aufgabe eingesetzt werden können. Aufgrund der einfachen, kostengünstigen Konstruktion wird die Verwendung eines statischen Mischers bevorzugt.

Der Druck hinter dem statischen Mischer bzw. unmittelbar vor dem Entspannungsorgan liegt zwischen 80 und 600 bar, bevorzugt zwischen 100 und 350 bar. Die entlang des statischen Mischers entstehenden Druckverluste hängen in hohem Maße von der tatsächlichen Viskosität und dem Phasenverhältnis ab und können 1 bis 400 bar, bevorzugt 10 bis 300 bar und insbesondere 15 bis 250 bar betragen. Dies bedeutet, dass vor dem statischen Mischer ein Druck herrscht, der erheblich größer sein kann als der Druck nach dem statischen Mischer. Ein hoher Druckverlust steht für einen großen Energieeintrag in das Medium in Form von hohen Scherraten und Strömungsgeschwindigkeiten und begünstigt somit die Auflösung einer ausreichenden Menge des kompressiblen Hilfsstoffes in der viskosen Polymerphase.

Die im statischen Mischer gebildete gashaltige Lösung wird zusammen mit evtl. vorhandenem überschüssigen Gas in einer Entspannungsvorrichtung verdüst.

Als Entspannungsvorrichtung wird vorzugsweise eine Düse verwendet.

Die Temperatur nach der Entspannung wird so eingestellt, dass ein nicht zusammenklebendes, pulverförmiges Produkt erhalten wird. Dies wird dann erreicht, wenn die Temperatur nach der Entspannung mindestens 5 K, vorzugsweise mehr als 30 K und insbesondere mehr als 50 K unter der Kristallitschmelztemperatur des Polyurethans liegt. Dies kann zum Beispiel erreicht werden
- durch die Verwendung von Wärmetauschern entlang der Förderwege,
- unter Ausnutzung des Joule-Thomson-Effektes des expandierenden Gases, also durch die Regelung der Stoffströme auf dem Fachmann bekannte Weise,
- durch eine zusätzliche Kühlung im Sprühturm sowie
- durch Kombination der genannten Möglichkeiten.

In einer bevorzugten Ausführungsform werden die gebildeten Partikel fraktioniert abgetrennt, besonders bevorzugt dadurch, dass der Partikelstrom zunächst durch einen Sprühturm, anschließend durch einen Zyklon und durch einen Feinfilter geleitet wird.

Die erfindungsgemäß erhaltenen Partikel werden bevorzugt als Klebstoff oder zur Herstellung von Klebstoffen eingesetzt.

Die Abbildungen dienen zusammen mit den folgenden Erläuterungen zur vertieften Illustration des erfindungsgemäßen Verfahrens. Sie sind in keiner Weise limitierend zu interpretieren.

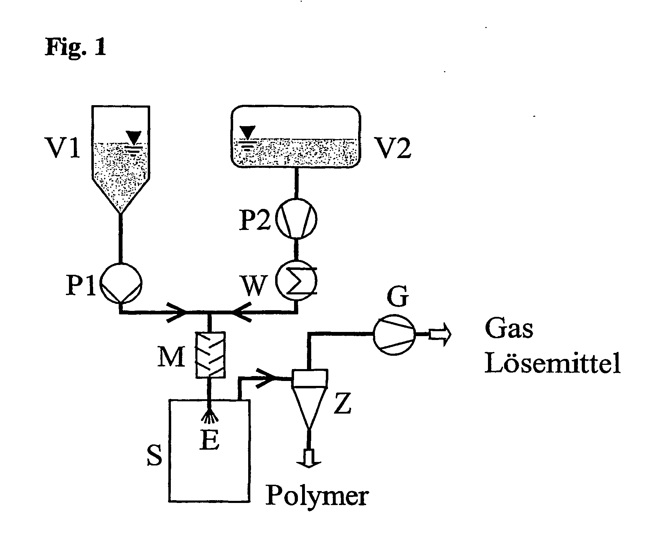

Gemäß Fig. 1 wird das thermisch aktivierbare Polyurethan in einem Vorratsbehälter V1 aufgeschmolzen und auf eine Temperatur aufgeheizt, die bis zu 150 K und insbesondere bis zu 100 K oberhalb seiner individuellen Kristallitschmelztemperatur (gemessen als Pealanaximum in der DSC bei einer Heizrate von 20 K/min) liegt. Das Polymer kann hierbei entweder in reiner Form oder aber prozessbedingt im Gemisch mit einem Lösemittel vorliegen. Daher wird im folgenden stets allgemein von einem Einsatz-Polyurethan gesprochen. In jedem Fall dient als Bezugstemperatur die Kristallitschmelztemperatur des lösemittelfreien Polymeren. Der Massenanteil des Polyurethans im Einsatz-Polyurethan kann 40 bis 100 Gew.- % betragen. Eine Pumpe P1 fördert die Polyurethanschmelze zu einer Mischstelle M. Als Förderorgane kommen dabei z.B. Extruder, Zahnrad-, Kolben-, Membran-, Exzenterschnecken-, Flügelzellen- und Kreiselpumpen in Betracht. Die Auswahl des Förderorganes richtet sich nach der Rheologie des Einsatz-Polyurethans. Bevorzugte Ausführungsformen sind Zahnrad-, Kolben-, Membranpumpen und Extruder sowie deren Kombinationen.

In einem Vorratsbehälter V2 wird das kompressible Hilfsmedium aufbewahrt und von einem Verdichter P2 verdichtet. Als kompressible Hilfsmedien kommen die oben beschriebenen in Betracht. Zur Verdichtung können Kolben- und Membranpumpen, aber auch Kolben- und Membranverdichter, gewählt werden. Das verdichtete, kompressible Hilfsmedium (im folgenden der Einfachheit halber als "Gas" bezeichnet) wird anschließend in einem Wärmetauscher W erhitzt. Die Temperatur des erhitzten Gases kann dabei auf Werte unterhalb oder oberhalb der Kristallitschmelztemperatur des Polymeren eingestellt werden.

Das thermisch aktivierbare Polyurethan und gegebenenfalls das Lösemittel sowie das verdichtete, temperierte Gas werden einer Mischstelle M zugeführt und mittels eines statischen Mischers unter den oben beschriebenen Drücken intensiv durchmischt. Dabei löst sich ein Teil des verdichteten Gases im Einsatz-Polyurethan. Die Massenstromverhältnisse zwischen kompressiblem Hilfsmedium und Einsatz-Polyurethan liegen zwischen 0,5 kg/kg (kg kompressibles Hilfsmedium pro kg Einsatz-Polyurethan) und 20 kg/kg, vorzugsweise zwischen 2 kg/kg und 10 kg/kg. Als statische Mischer werden Sulzer-Schmelzemischer eingesetzt. Es können auch die Bauarten Kenics, Fluitec oder Ross oder alle anderen die Durchmischung fördernden statischen Einbauten, deren Kombinationen oder geometrische Variationen genutzt werden.

Nach dem Durchmischen wird das Einsatz-Polyurethan durch eine Entspannungsvorrichtung E schlagartig in einen Sprühturm S entspannt. Der Sprühturm wird dabei bei Drücken von 0,01 bar abs. bis 20 bar abs., vorzugsweise bei 0,2 bar bis Umgebungsdruck, betrieben. Als Entspannungsorgane dienen vorzugsweise Einkomponentendüsen, es können aber auch Zweikomponentendüsen oder andere Entspannungsorgane wie Kapillaren, Ventile, Blenden oder ähnliches eingesetzt werden.

Es entsteht ein feinteiliges, trockenes, nicht-klebriges Pulver, obwohl es sich bei dem Einsatz-Polyurethan um ein hochviskoses, thermisch aktivierbares Polyurethan mit verzögerter Kristallisation handelt.

Polyurethanpulver, Gas und ggf. verdampftes Lösemittel werden aus dem Sprühturm S abgesaugt und zu einem Zyklon Z geleitet. Im Zyklon Z wird das Pulver vom kompressiblen Hilfsmedium und ggf. dem dampfförmigen Lösemittel getrennt. Man erhält am Zyklonunterlauf das feinteilige Polyurethanpulver. Das Lösemittel-Gas-Gemisch kann durch einen Elektrofeinfilter von feinsten Pulverpartikeln gereinigt werden. Das Gas und das Lösemittel werden von einem Sauggebläse G angesaugt und können einer Lösemittelabtrennung unterzogen werden. Als Förderorgane für das Lösemittel-Gas-Gemisch dienen, abhängig vom gewünschten Absolutdruck im Sprühturm, Radial- oder Axialvendlatoren, Seitenkanal-Vakuumpumpen, Injektoren, Drehschieber-Vakuumpumpen, Kreiskolbengebläse oder ähnliches.

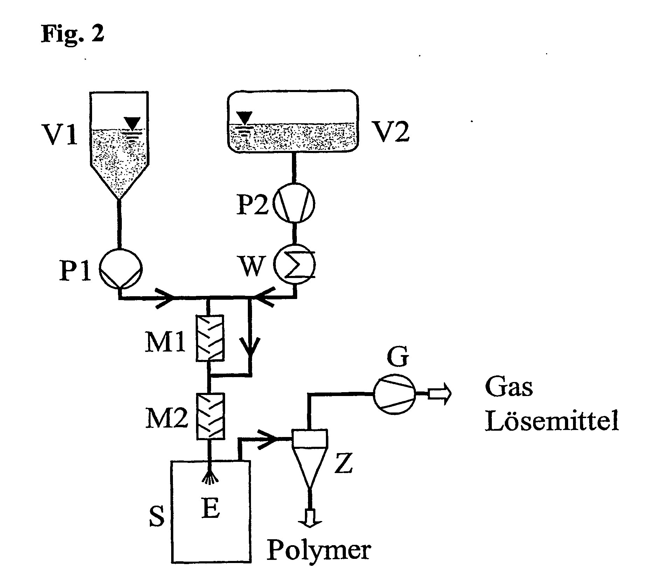

Fig. 2 illustriert eine weitere Ausführungsform des erfindungsgemäßen Verfahrens. Diese ist der Ausführungsform 1 ähnlich, jedoch wird noch vor dem Entspannungsorgan, und zwar zwischen zwei zur Durchmischung geeigneten Rohrabschnitten M1 und M2, die mit verschiedenen statischen Mischern ausgerüstet sein können, zusätzlich kompressibles Hilfsmedium zudosiert. Dadurch können die Durchmischungsorgane bei günstigeren Massenstromverhältnissen zwischen kompressiblem Hilfsmedium und Einsatz-Polyurethan-Gemisch betrieben werden und zudem kann ein höherer Gehalt an gelöstem kompressiblem Medium erreicht werden.

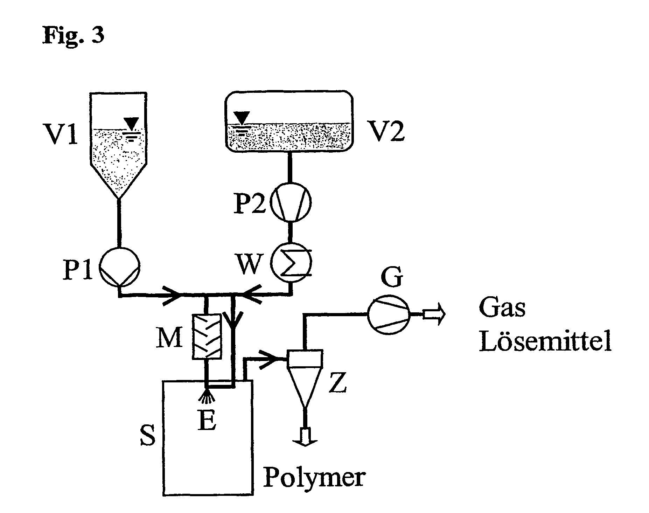

Eine weitere Ausführungsform des erfindungsgemäßen Verfahrens ist in Fig. 3 dargestellt. Wiederum ist diese der Ausführungsform 1 ähnlich, jedoch kommt als Entspannungsvorrichtung E eine Zweistoffdüse zum Einsatz. Zusätzlich zu dem oder anstelle des im Einsatz-Polyurethan gelösten Gases kann dabei weiteres verdichtetes kompressibles Hilfsmedium einen Beitrag an kinetischer Energie zum Zerteilen der Schmelzetröpfchen aufbringen. Bei dem zusätzlich zugegebenen kompressiblen Hilfsmedium handelt es sich nicht notwendigerweise - wie in Fig. 3 vereinfachend dargestellt - um die gleiche Substanz wie die aus Vorratsbehälter V2.

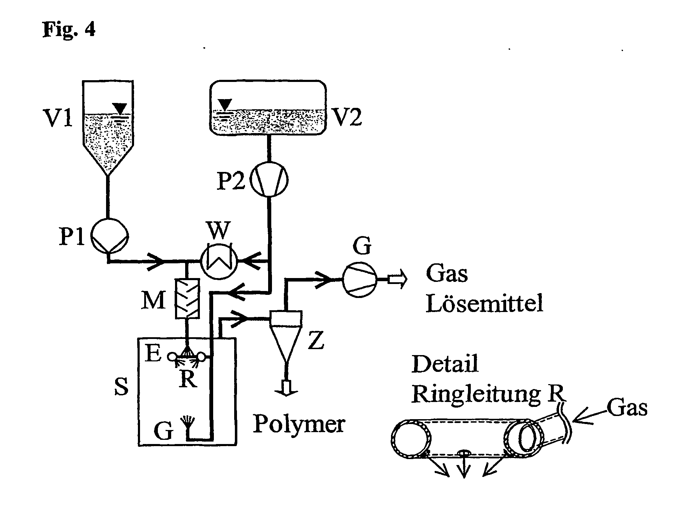

Alternativ kann eine Ausführungsform gemäß Fig. 4 zur Durchführung des erfindungsgemäßen Verfahrens gewählt werden, in der wie in Ausführungsform 1 beschrieben vorgegangen wird, jedoch wird zur Kühlung der Schmelzetröpfchen in einer Ringleitung R ein Vorhang aus hochkompressiblem Medium erzeugt. Die Ringleitung R besteht aus einer kreisförmig gebogenen Rohrleitung mit Zuleitung des kompressiblen Hilfsmediums, die vorzugsweise orthogonal zur Entspannungsvorrichtung angeordnet ist. In die Ringleitung sind feine Bohrungen eingebracht, die den beschriebenen Gasvorhang erzeugen. Die Ringdüse sitzt unmittelbar unter der Entspannungsvorrichtung E. Es können auch andere Vorrichtungen genutzt werden, die auf ähnliche Weise die Schmelze direkt nach Verlassen der Entspannungsvorrichtung abkühlen. Gleichzeitig kann das zusätzliche Einblasen von komprimiertem Hilfsmedium den Sprühturm vorkühlen. Diese zusätzliche Entspannungsvorrichtung muss nicht direkt an der Entspannungsstelle E angebracht sein, es ist auch eine Vorkühlung im Gegenstrom zu den Partikeln möglich. In Fig. 4 ist die zusätzliche Entspannungsvorrichtung durch die Gegenstromdüse G dargestellt. Bevorzugt werden Einkomponenten-Hohlkegeldüsen eingesetzt, es können aber auch Flachstrahl-, Vollkegeldüsen, Ventile und Kapillaren genutzt werden.

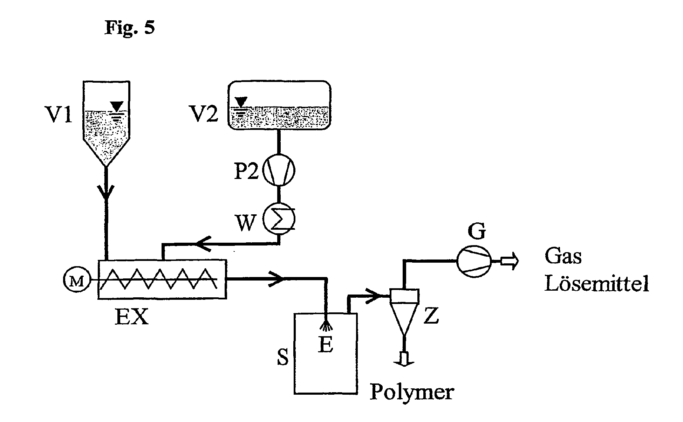

Eine weitere Ausführungsform des erfindungsgemäßen Verfahrens ist in Fig. 5 dargestellt. Wiederum ist diese der Ausführungsform 1 ähnlich, jedoch wird zur Förderung des Einsatz-Polyurethans statt der Pumpe P1 ein Extruder EX eingesetzt. Es können Ein-, Zwei- oder Mehrwellenextruder oder auch Planetenextruder genutzt werden, die Auswahl bestimmt der Fachmann in Abhängigkeit von den Parametern des konkreten Falles. Im Extruder EX kann das Einsatz-Polyurethan natürlich auch aufgeschmolzen werden. In der Mischzone des Extruders EX wird das kompressible Hilfsmedium zudosiert und intensiv mit dem Einsatz-Polyurethan vermischt. Anschließend wird die Schmelze wie in der Ausführungsform gemäß Fig. 1, d.h. bei Drücken zwischen 50 bar und 1000 bar, vorzugsweise zwischen 80 bar und 800 bar, insbesondere zwischen 100 bar und 600 bar, schlagartig in einen Sprühturm entspannt.

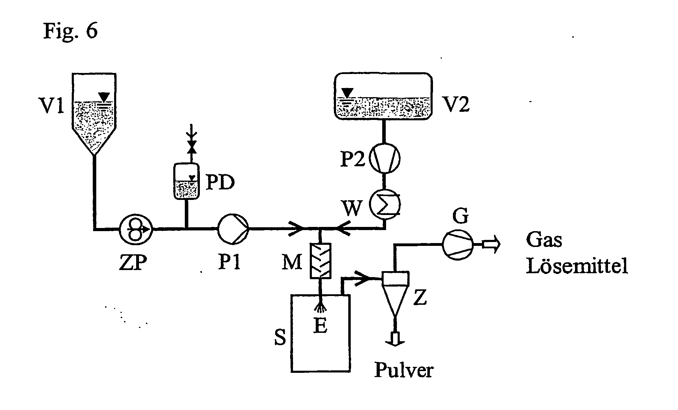

Eine weitere, bevorzugte Ausführungsform der erfindungsgemäßen Verfahrens ist in Fig. 6 dargestellt. Wiederum ist diese der Ausführungsform 1 ähnlich, jedoch wird zur Förderung des Einsatz-Polyurethans eine Kombination einer Zahnradpumpe ZP als Zulaufpumpe und einer Membranpumpe P1, vorzugsweise einer Mehrkopfmembranpumpe, eingesetzt. Zur Abstimmung der Fördermengen beider Pumpen kann ein Dämpfungsglied PD zwischen den Pumpen angeordnet werden. Durch diese Anordnung der Förderorgane wird ein Zurückschlagen des Gases auf die Saugseite bei hohen Drücken verhindert. Gleichzeitig ermöglicht die drucksteife Kennlinie der Mehrkopfmembranpumpe eine hohe Konstanz und eine geringe Pulsation des Dosierstroms.

Die folgenden Beispiele dienen der weiteren Darstellung der Erfindung und sind in keiner Weise limitierend zu interpretieren.

### Beispiele

### Beispiel 1

Das thermisch aktivierbare Polyurethan Desmocoll® 540 (Bayer AG, DE) hat eine Kristallitschmelatemperatur von ca. 50°C (gemäß DSC bei Heizrate 20 K/min) und eine Rekristallisationszeit von ca. 19 min bei 23°C (Zeit bis zum Erreichen von 90 % der maximalen Shore A-Härte eines verpressten Films von ca. 6 mm Dicke nach 25 min Lagerung bei 75°C). Die verwendete Spezifikation ist durch eine Viskosität von 100-300 mPas bei 23°C (15%-ig in Butanon) gekennzeichnet.

Das thermisch aktivierbare Polyurethan wird in einer Anlage nach Fig. 1 verarbeitet. Dazu wird das Polyurethan im Vorratsbehälter V1 aufgeschmolzen und auf 135°C temperiert. Die Schmelze wird mit einer Membranpumpe zur Mischstelle, einem Sulzer-Schmelzemischer vom Typ SMX, gefördert. Als kompressibles Hilfsmedium dient Kohlendioxid ("Elektronikqualität", AGA Gas GmbH & Co. KG, DE). Das Kohlendioxid wird von einem Membranverdichter auf 160 bar komprimiert und in einem Rohrschlangenwärmetauscher auf 85°C erwärmt. Nach dem intensiven Durchmischen im statischen Mischer bei etwa 93°C wird das Polyurethan-Kohlendioxid-Gemisch mit einer Hohlkegeldüse (Durchmesser der Bohrung 0,7 mm, Sprühkegel 90°) entspannt. Das Massenstromverhältnis zwischen Kohlendioxid und Polyurethan beträgt dabei 8:1. Im Sprühturm stellt sich bei einem Absolutdruck von 0,95 bar eine Temperatur von 26°C ein. Das entstehende Polyurethanpulver wird mit Hilfe eines Zyklons vom Kohlendioxid getrennt. Das Kohlendioxid wird von einem Sauggebläse abgezogen. Man erhält ein feinteiliges Polyurethanpulver.

### Beispiel 2

Das thermisch aktivierbare Polyurethan wird in einer Anlage nach Fig. 1 verarbeitet. Dazu wird ein Polyurethan-Lösemittel-Gemisch, das 95 Gew.-% Polyurethan gemäß Beispiel 1 und 5 Gew.-% Toluol enthält, im Vorratsbehälter V1 bei 135°C vorgelegt.

Eine Membranpumpe fördert das Polyurethan-Toluol-Gemisch zur Mischstelle mit einem Sulzer-Schmelzemischer SMX. Darin wird das Polyurethan-Toluol-Gemisch mit dem auf etwa 205 bar komprimierten und auf 90°C erwärmten Kohlendioxid durchmischt. Das Massenstromverhältnis zwischen Kohlendioxid und Polyurethan-Toluol-Gemisch beträgt etwa 7:1. Das Polyurethan-Toluol-Kohlendioxid-Gemisch wird mit einer Hohlkegeldüse (Durchmesser der Bohrung 0,8 mm, Sprühkegel 90°) entspannt. Bei einem Absolutdruck im Sprühturm von 0,95 bar ergibt sich eine Sprühturmtemperatur von 17°C. Das Kohlendioxid und das dampfförmige Lösemittel Toluol werden von einem Gebläse abgesaugt und in einem Zyklon vom feinen Polyurethanpulver getrennt.

Man erhält ein feinteiliges Polyurethanpulver mit einem Restlösemittelgehalt von unter 1,0 Gew.-%.

### Beispiel 3

Das thermisch aktivierbare Polyurethan wird in einer Anlage nach Fig. 1 verarbeitet. Dazu wird ein Polyurethan-Lösemittel-Gemisch, das 40 Gew.-% Polyurethan gemäß Beispiel 1 und 60 Gew.-% Toluol enthält, im Vorratsbehälter V1 bei 130°C in flüssiger Form vorgelegt.

Eine Pumpe P 1 fördert das Polyurethan-Toluol-Gemisch zur Mischstelle mit einem Sulzer-Schmelzemischer SMX. Dort wird das Polyurethan-Toluol-Gemisch mit dem auf etwa 170 bar komprimierten und auf 105°C erwärmten Kohlendioxid durchmischt. Das Massenstromverhältnis zwischen Kohlendioxid und Polyurethan-Toluol-Gemisch beträgt etwa 16:1. Das Polyurethan-Toluol-Kohlendioxid-Gemisch wird mit einer Hohlkegeldüse (Durchmesser der Bohrung 0,7 mm, Sprühkegel 90°) entspannt. Bei einem Absolutdruck im Sprühturm von 0,95 bar ergibt sich eine Sprühturmtemperatur von 18°C. Das Kohlendioxid und das dampfförmige Lösemittel Toluol werden von einem Gebläse abgesaugt und in einem Zyklon vom feinen Polyurethanpulver getrennt.

Man erhält ein feinteiliges Polyurethanpulver mit einem Restlösemittelgehalt von unter 4,0 Gew.-%.

### Beispiel 4

Das thermisch aktivierbare Polyurethan aus Beispiel 1 wird in einer Anlage nach Fig. 1 verarbeitet. Dazu wird ein Polyurethan-Lösemittel-Gemisch, das 70 Gew.-% Polyurethan gemäß Beispiel 1 und 30 Gew.-% Aceton enthält, im Vorratsbehälter V1 bei 130°C vorgelegt.

Eine Membranpumpe fördert das Polyurethan-Aceton-Gemisch zur Mischstelle mit einem Sulzer-Schmelzemischer SMX. Dort wird das Polyurethan-Aceton-Gemisch mit dem auf etwa 130 bar komprimierten und auf 105°C erwärmten Kohlendioxid durchmischt. Das Massenstromverhältnis zwischen Kohlendioxid und Polyurethan-Aceton-Gemisch beträgt etwa 12:1. Das Polyurethan-Aceton-Kohlendioxid-Gemisch wird mit einer Hohlkegeldüse (Durchmesser der Bohrung 0,7 mm, Sprühkegel 90°) entspannt. Bei einem Absolutdruck im Sprühturm von 0,95 bar ergibt sich eine Sprühturmtemperatur von 28°C. Das Kohlendioxid und das dampfförmige Lösemittel Aceton werden von einem Gebläse abgesaugt und in einem Zyklon vom feinen Polyurethanpulver getrennt.

Man erhält ein feinteiliges Polyurethanpulver mit einem Restlösemittelgehalt von unter 1,0 Gew.-%.

### Beispiel 5

Das thermisch aktivierbare Polyurethan wird in einer Anlage nach Fig. 4 verarbeitet. Dazu wird das Polyurethan-Lösemittel-Gemisch, das 99 Gew.-% Polyurethan gemäß Beispiel 1 und 1 Gew.-% Toluol enthält, im Vorratsbehälter V1 bei 130°C vorgelegt.

Eine Membranpumpe fördert das Polyurethan-Toluol-Gemisch zur Mischstelle mit einem Sulzer-Schmelzemischer SMX. Dort wird das Polyurethan-Toluol-Gemisch mit dem auf etwa 170 bar komprimierten und auf 90°C erwärmten Kohlendioxid durchmischt. Das Massenstromverhältnis zwischen Kohlendioxid und Polyurethan-Toluol-Gemisch beträgt etwa 12:1. Das Polyurethan-Toluol-Kohlendioxid-Gemisch wird mit einer Hohlkegeldüse (Durchmesser der Bohrung 0,7 mm, Sprühkegel 90°) entspannt. Direkt unter der Hohlkegeldüse ist eine Ringleitung mit 4 nach innen gerichteten Bohrungen angebracht, durch die komprimiertes Kohlendioxid eingeblasen wird. Bei einem Absolutdruck im Sprühturm von 0,95 bar ergibt sich eine Sprühturmtemperatur von 2°C. Das Kohlendioxid und das dampfförmige Lösemittel Toluol werden von einem Gebläse abgesaugt und in einem Zyklon vom feinen Polyurethanpulver getrennt.

Das erhaltene Pulver weist einen Restlösemittelgehalt von unter 0,3 Gew.-% auf.

### Beispiel 6

Das thermisch aktivierbare Polyurethan wird in einer Anlage nach Fig. 5 verarbeitet. Dazu wird ein Polyurethan-Lösemittel-Gemisch, das 99 Gew.-% Polyurethan gemäß Beispiel 1 und 1 Gew.-% Toluol enthält, mit Hilfe eines Zweiwellenextruders aufgeschmolzen.

Nach der Einzugs- und Aufschmelzzone wird Kohlendioxid mittels einer Hochdruckmembrandosierpumpe in den Extruder dosiert. In der Mischzone des Extruders wird das Kohlendioxid mit dem Polyurethan-Toluol-Gemisch durchmischt und eingelöst. Anschließend wird das Polyurethan-Toluol-Kohlendioxid-Gemisch mittels einer Hohlkegeldüse (Durchmesser der Bohrung 0,7 mm, Sprühwinkel 90°) in einen Sprühturm entspannt. Die Temperatur im Sprühturm beträgt dabei etwa 18°C, der Druck etwa 0,95 bar absolut. Das Kohlendioxid und das Lösemittel Toluol werden von einem Gebläse abgesaugt und in einem Zyklon vom feinen Polyurethanpulver getrennt.

Das so erhaltene Polyurethanpulver weist einen Restlösemittelgehalt von unter 0,3 Gew.-% auf.

Das erfindungsgemäß erhaltene Material eignet sich hervorragend zur Herstellung von Lösungsklebstoffen, da es sich durch seine Feinteiligkeit und große spezifische Oberfläche erheblich schneller auflöst als die vergleichbaren Granulate, sofern bei der Dosierung durch geeignete Maßnahmen wie starkes Rühren vermieden wird, dass die anquellenden Partikel agglomerieren. Die so erhaltene Klebstofflösung weist die selben Klebeigenschaften wie eine gleichartige Lösung des bisher handelsüblichen Polyurethans auf und eignet sich für ein- oder zweikomponentige Verarbeitung in der bekannten Weise.

Das erfindungsgemäß erhaltene Material eignet sich je nach Teilchengrößenverteilung auch unmittelbar als Pulverklebstoff für verschiedene Klebverfahren wie Streubeschichtung, Pastenpunkt-, Doppelpunktverfahren usw. Dies stellt einen besonderen technischen Vorteil dar, da derartige Pulver in anderen Verfahren nicht direkt anfallen, sondern - wie oben erwähnt - durch Kaltvermahlung aufwendig und kostenintensiv umgearbeitet werden müssen.

Eine Weiterkonfektionierung des erfindungsgemäß erhaltenen Materials kann selbstverständlich je nach Anwendung und Bedarf durch Kompaktierung oder weitere Zerkleinerung, antistatische Ausrüstung usw. erfolgen.

## Patentansprüche

1. Verfahren zur Erzeugung von Partikeln aus Lösungen oder Schmelzen eines thermisch aktivierbaren Polyurethans mit einer Schmelzeviskosität im Bereich von 1.000 bis 10.000 Pa·s, welches aufgebaut ist aus
a) kristallisierenden oligomeren Dihydroxyverbindungen,
b) optional amorphen oligomeren Dihydroxyverbindungen in einem gegenüber a) unterschüssigen Massenanteil,
c) aromatischen und/oder aliphatischen Diisocyanaten,
d) optional niedermolekularen difunktionellen Kettenverlängerungsmitteln und
e) optional weiteren Zuschlagstoffen wie Lichtschutzmitteln, Alterungsschutzmitteln, Puderungsmitteln sowie polyfunktionellen Vernetzermolekülen,
enthaltend die Schritte
- Bereitstellen einer förderbaren Lösung oder Schmelze des thermisch aktivierbaren Polyurethans,
- Bereitstellen eines kompressiblen Hilfsstoffes,
- Auflösen des kompressiblen Hilfsstoffes in der Lösung oder Schmelze des thermisch aktivierbaren Polyurethans unter Druck zu einem Gemisch aus Polyurethan, kompressiblem Hilfsstoff und gegebenenfalls Lösemittel,
- gegebenenfalls Temperierung des entstehenden Gemisches,
- Entspannen des Gemisches mittels einer Entspannungsvorrichtung in einen Behälter, wobei sich die Temperatur im Behälter mindestens 22 K unter der Erweichungstemperatur des Polyurethans einstellt und noch im Freistrahl eine Bildung von nicht zusammen klebenden Partikeln stattfindet, und schließlich
- Abtrennen der gebildeten Partikel aus dem Strom des entkomprimierten kompressiblen Hilfsstoffes und ggf. des Lösemittels.

2. Verfahren nach Anspruch 1, **dadurch gekennzeichnet, dass** es sich bei den kristallisierenden oligomeren Dihydroxyverbindungen um Polyester einer zwischen 500 und 5000 g/mol liegenden zahlenmittleren Molmasse handelt.

3. Verfahren nach Ansprüchen 1 oder 2, **dadurch gekennzeichnet, dass** es sich bei den aromatischen Diisocyanaten um MDI und/oder TDI und bei den aliphatischen Isocyanaten um HDI, H₆-TDI, H₁₂-MDI und/oder IPDI handelt.

4. Verfahren nach einem der Ansprüche 1 bis 3, **dadurch gekennzeichnet, dass** es sich bei den niedermolekularen Kettenverlängerungsmitteln um Diole handelt.

5. Verfahren nach einem der Ansprüche 1 bis 4, **dadurch gekennzeichnet, dass** es sich bei den optional enthaltenen Vernetzermolekülen um polyfunktionelle Isocyanate in blockierter oder freier Form handelt.

6. Verfahren nach einem der Ansprüche 1 bis 5, **dadurch gekennzeichnet, dass** das Polyurethan in einem organischen Lösemittel oder Lösemittelgemisch gelöst vorliegt.

7. Verfahren nach Anspruch 6, **dadurch gekennzeichnet, dass** neben dem Polyurethan ein Prozesslösemittel in einer Konzentration, bezogen auf die Mischung, von bis zu 60 Gew.-% vorgelegt wird.

8. Verfahren nach einem der Ansprüche 1 bis 5, **dadurch gekennzeichnet, dass** lösemittelfreies Polyurethan eingesetzt wird.

9. Verfahren nach einem der Ansprüche 1 bis 8, **dadurch gekennzeichnet, dass** als kompressibler Hilfsstoff Kohlendioxid, ein n- oder iso-Alkan wie Ethan, Propan oder Butan, ein n- oder iso-Alken wie Ethen, Propen oder Buten, ein halogenhaltiger Kohlenwasserstoff, ein Ether wie Dimethylether, Ethylmethylether oder Diethylether, eine stickstoffhaltige Verbindung wie Stickstoff, Ammoniak oder Distickstoffmonoxid oder Schwefelhexafluorid oder Gemische hieraus verwendet werden.

10. Verfahren nach einem der Ansprüche 1 bis 9, **dadurch gekennzeichnet, dass** der Druck während des Auflösens des kompressiblen Hilfsstoffes im Bereich von 50 bis 1000 bar liegt.

11. Verfahren nach einem der Ansprüche 1 bis 10, **dadurch gekennzeichnet, dass** die Temperatur während des Auflösens des kompressiblen Hilfsstoffes zwischen 40 K unterhalb und 150 K oberhalb der Kristallitschmelztemperatur des lösemittelfreien Polyurethans liegt.

12. Verfahren nach einem der Ansprüche 1 bis 11, **dadurch gekennzeichnet, dass** das Verfahren kontinuierlich betrieben wird.

13. Verfahren nach einem der Ansprüche 1 bis 12, **dadurch gekennzeichnet, dass** die Auflösung des kompressiblen Hilfsstoffes in einem statischen Mischer stattfindet.

14. Verfahren nach einem der Ansprüche 1 bis 13, **dadurch gekennzeichnet, dass** als Entspannungsvorrichtung eine Düse verwendet wird.

15. Verfahren nach einem der Ansprüche 1 bis 14, **dadurch gekennzeichnet, dass** die gebildeten Partikel fraktioniert abgetrennt werden.

16. Verfahren nach Anspruch 15, **dadurch gekennzeichnet, dass** der Partikelstrom zur fraktionierten Abtrennung zunächst durch einen Sprühturm, durch einen Zyklon und durch einen Feinfilter geleitet wird.

17. Verwendung der nach einem der Ansprüche 1 bis 16 erzeugten Materialien als Klebstoff oder zur Herstellung von Klebstoffen.

## Claims

1. A process for the production of particles from solutions or melts of a heat-activatable polyurethane having a melt viscosity in the range of 1,000 to 10.000 Pa·s, which is composed of
a) crystallizing oligomeric dihydroxy compounds;
b) optionally amorphous oligomeric dihydroxy compounds in an amount by weight which is less than that of a);
c) aromatic and/or aliphatic diisocyanates;
d) optionally low molecular weight difunctional chain extenders and
e) optionally further admixtures such as light stabilizers, antioxidants, powdering agents as well as polyfunctional cross-linking molecules,
comprising the steps of
- providing a conveyable solution or melt of the heat-activatable polyurethane;
- providing a compressible auxiliary agent;
- dissolving the compressible auxiliary agent in the solution or melt of the heat-activatable polyurethane under pressure to a mixture of polyurethane, compressible auxiliary agent and optionally solvent;
- optionally adjusting the temperature of the resulting mixture;
- expanding the mixture by means of an expansion device into a container, while the temperature in the container is adjusted to at least 22K below the softening temperature of the polyurethane and a formation of not agglomerating particles still takes place in the open jet, and finally
- separating the formed particles from the stream of decompressed compressible auxiliary agent and optionally solvent.

2. The process according to claim 1, **characterized in that** the crystallizing oligomeric dihydroxy compounds are polyesters having a number average molecular weight of between 500 and 5000 g/mol.

3. The process according to claim 1 or 2, **characterized in that** the aromatic diisocyanates are MDI and/or TDI and the aliphatic isocyanates are HDI, H₆-TDI, H₁₂₋MDI and/or IPDI.

4. The process according to one of claims 1 to 3, **characterized in that** the low molecular weight chain extenders are diols.

5. The process according to one of claims 1 to 4, **characterized in that** the optionally contained cross-linking molecules are polyfunctional isocyanates in blocked or free form.

6. The process according to one of claims 1 to 5, **characterized in that** the polyurethane is dissolved in an organic solvent or solvent mixture.

7. The process according to claim 6, **characterized in that** in addition to the polyurethane, a process solvent is provided in a concentration, based on the mixture, of up to 60 wt-%.

8. The process according to one of claims 1 to 5, **characterized in that** solvent-free polyurethane is used.

9. The process according to one of claims 1 to 8, **characterized in that** carbon dioxide, an n- or iso-alkane such as ethane, propane or butane, an n- or iso-alkene such as ethene, propene or butene, a halogen-containing hydrocarbon, an ether such as dimethyl ether, ethylmethyl ether or diethyl ether, a nitrogenous compound such as nitrogen, ammonium or dinitrogen monoxide or sulphur hexafluoride or mixtures thereof are used as compressible auxiliary agent.

10. The process according to one of claims 1 to 9, **characterized in that** the pressure during the dissolution of the compressible auxiliary agent is within the range 50 to 1000 bar.

11. The process according to one of claims 1 to 10, **characterized in that** the temperature during the dissolution of the compressible auxiliary agent is between 40 K below and 150 K above the crystallite melting point of the solvent-free polyurethane.

12. The process according to one of claims 1 to 11, **characterized in that** the process is operated in a continuous manner.

13. The process according to one of claims 1 to 12, **characterized in that** the dissolution of the compressible auxiliary agent takes place in a static mixer.

14. The process according to one of claims 1 to 13, **characterized in that** a nozzle is used as the expansion device.

15. The process according to one of claims 1 to 14, **characterized in that** the particles formed are separated in fractional manner.

16. The process according to claim 15, **characterized in that** the particle stream to the fractional separation is guided first through a spray tower, through a cyclone and through a fine filter.

17. Use of the materials produced according to one of claims 1 to 16 as adhesive or for producing adhesives.

## Revendications

1. Procédé de fabrication de particules à partir de solutions ou de masses fondues de polyuréthane activable à la chaleur affichant une viscosité comprise entre 1 000 et 10 000 Pa.s, lequel procédé est basé sur
a) des composés dihydroxy oligomères cristallisants
b) optionnellement des composés dihydroxy oligomères amorphes selon une fraction massique déficitaire par rapport à a)
c) des diisocyanates aliphatiques et/ou aromatiques
d) optionnellement des agents difonctionnels de faible poids moléculaire destinés à l'allongement des chaînes et
e) optionnellement d'autres ajouts, tels qu'inhibiteurs de lumière, agents protecteurs contre le vieillissement, agents de pulvérisation, ainsi que des molécules polyfonctionnelles d'agents réticulants,
comprenant pour étapes
- la mise à disposition d'une solution ou masse fondue acheminable de polyuréthane activable à la chaleur,
- la mise à disposition d'un agent auxiliaire compressible
- dissolution sous pression de l'agent auxiliaire compressible dans la solution ou la masse fondue de polyuréthane activable à la chaleur pour obtenir un mélange composé de polyuréthane, d'un agent auxiliaire compressible et, le cas échéant, d'un solvant,
- éventuellement la températion du mélange obtenu
- la détente dans un réservoir du mélange à l'aide d'un dispositif de détente, la température dans le réservoir s'ajustant au minimum à 22 K en dessous de la température d'amollissement du polyuréthane et la formation de particules non collantes entre elles intervenant encore dans le jet libre et, pour finir,
- la séparation des particules formées du flux de l'agent auxiliaire compressible décomprimé et, le cas échéant, du flux du solvant.

2. Procédé selon la revendication 1, **caractérisé en ce qu'**il s'agit, pour les composés dihydroxy oligomères cristallisants, d'un polyester de masse molaire moyenne en nombre située entre 500 et 5000 g/mol.

3. Procédé selon la revendication 1 ou 2, **caractérisé en ce qu'**il s'agit, pour les diisocyanates aromatiques, de MDI et/ou de TDI et, pour les isocyanates aliphatiques, de HDI, H₆-TDI, H₁₂-MDI et/ou IPDI.

4. Procédé selon l'une des revendications 1 à 3, **caractérisé en ce qu'**il s'agit, pour les agents de faible poids moléculaire destinés à l'allongement des chaînes, de diols.

5. Procédé selon l'une des revendications 1 à 4, **caractérisé en ce qu'**il s'agit, pour les molécules d'agents réticulants optionnellement contenues, d'isocyanates polyfonctionnels sous forme bloquée ou sous forme libre.

6. Procédé selon l'une des revendications 1 à 5, **caractérisé en ce que** le polyuréthane se présente dissout dans un solvant organique ou dans un mélange de solvants organiques.

7. Procédé selon la revendication 6, **caractérisé en ce qu'**il est utilisé, en plus du polyuréthane, un solvant de process dans une concentration pouvant aller jusqu'à 60 % en poids par rapport au mélange.

8. Procédé selon l'une des revendications 1 à 5, **caractérisé en ce qu'**il est utilisé du polyuréthane exempt de solvant.

9. Procédé selon l'une des revendications 1 à 8, **caractérisé en ce qu'**il est utilisé comme agent auxiliaire compressible du dioxyde de carbone, un n-alcane ou un iso-alcane tel que l'éthane, le propane ou le butane, un n-alcène ou un isoalcène tel que l'éthène, le propène ou le butène, un hydrocarbure halogéné, un éther tel que l'éther diméthylique, l'éther méthyléthylique ou l'éther diéthylique, un composé azoté tel que l'azote, l'ammoniaque ou le monoxyde de diazote ou l'hexafluorure de soufre ou des mélanges réalisés à partir de ceux-ci.

10. Procédé selon l'une des revendications 1 à 9, **caractérisé en ce que** la pression pendant la dissolution de l'agent auxiliaire compressible est comprise entre 50 et 1000 bar.

11. Procédé selon l'une des revendications 1 à 10, **caractérisé en ce que** la température pendant la dissolution de l'agent auxiliaire compressible se situe entre 40 K en dessous et 150 K en dessus de la température de fusion cristalline du polyuréthane exempt de solvant.

12. Procédé selon l'une des revendications 1 à 11, **caractérisé en ce que** le procédé se déroule de manière continue.

13. Procédé selon l'une des revendications 1 à 12, **caractérisé en ce que** la dissolution de l'agent auxiliaire compressible s'opère dans un mélangeur statique.

14. Procédé selon l'une des revendications 1 à 13, **caractérisé en ce qu'**il est utilisé une buse comme dispositif de détente.

15. Procédé selon l'une des revendications 1 à 14, **caractérisé en ce que** les particules formées sont séparées par fractionnement.

16. Procédé selon la revendication 15, **caractérisé en ce que** le flux de particules traverse d'abord un atomiseur, un cyclone et un filtre fin pour la séparation fractionnée des particules.

17. Utilisation des matières produites selon l'une des revendications 1 à 16 comme colles ou pour la fabrication de colles.
